# EUROPEAN PATENT APPLICATION

(11) **EP 4 730 281 A1**
(43) Date of publication of application: **22.04.2026**
(21) Application number: 24943658.5
(22) Date of filing: 06.11.2024
(51) Int. Cl.: G06V 40/10

(54) **SHUSHING GESTURE DETECTION METHOD AND APPARATUS, ELECTRONIC DEVICE, AND STORAGE MEDIUM**

(30) Priority: 26.08.2024 CN 202411170859
(71) Applicant: Hangzhou Ruijian Zhixing Technology Co., Ltd., Hangzhou, Zhejiang 311222 (CN)
(72) Inventor: GUO, Xi, Hangzhou, Zhejiang 311222 (CN); YANG, Yihong, Hangzhou, Zhejiang 311222 (CN); LIU, Guoqing, Hangzhou, Zhejiang 311222 (CN)
(74) Representative: Vogelbruch, Keang
(86) International application number: PCT/CN2024/130280
(87) International publication number: WO 2026/044925

(57) **Abstract**

The present invention provides a shush gesture detection method and apparatus, an electronic device, and a storage medium. The present invention enables the control of target controllable components in a vehicle through gestures, allowing for quicker control, thereby enhancing interaction efficiency. Moreover, compared to voice control methods, the method using gesture is less susceptible to environmental impact, which helps improve anti-interference capability during interactions within the vehicle cabin environment.

## Description

### CROSS-REFERENCE TO RELATED APPLICATIONS

The present invention claims the priority to the Chinese patent application with the filling No. 202411170859.7 filed with the Chinese Patent Office on August 26, 2024, and entitled "SHUSH GESTURE DETECTION METHOD, APPARATUS, ELECTRONIC DEVICE, AND STORAGE MEDIUM", the contents of which are incorporated herein by reference in entirety.

### TECHNICAL FIELD

The present invention relates to the field of computer technology, in particular to a shush gesture detection method and apparatus, an electronic device, and a storage medium.

### BACKGROUND ART

Currently, interaction methods for some functions in vehicles are performed through control buttons (including physical buttons or touch buttons), such as pausing music, closing the sunroof, etc. When users control these functions, they need to use the corresponding buttons. This control method requires finding the corresponding buttons before control can be completed. Although voice control systems exist as supplements, when there is noise in the vehicle cabin, the accuracy and response speed of voice recognition significantly decrease. Therefore, there is an urgent need for an interaction method with strong anti-interference capability and convenient interaction.

### SUMMARY

In view of this, embodiments of the present invention provide a shush gesture detection method and apparatus, an electronic device, and a storage medium, to improve anti-interference capability during interactions in a vehicle cabin environment and enable efficient interaction.

In a first aspect, an embodiment of the present invention provides a shush gesture detection method. The method includes:
acquiring face keypoints from a face image including a face inside a vehicle, wherein the face image is captured by an in-vehicle camera;
cropping a first target image from the face image based on a rectangular region constructed with a target keypoint among the face keypoints as a center, a first preset multiple of the area of a bounding rectangle of a figure formed by the face keypoints as the width, a preset ratio of the width as a height, and an extension direction of the face in the face image as an inclination direction of the height, wherein the first preset multiple is a positive number, the preset ratio is less than 1, and the target keypoint belongs to keypoint in a lip region;
inputting the first target image into a shush detection model to determine whether the face image contains a shush gesture; and
controlling, in response to determining that the face image contains the shush gesture, a target controllable component in the vehicle to perform a preset action.

Optionally, after acquiring the face keypoints, the method further includes:
inputting the face image into a face detection model to obtain primary face keypoints in the face image;
mapping the primary face keypoints onto corresponding keypoints on a standard 3D face model to obtain a reconstructed 3D face model; and
mapping the reconstructed 3D face model back onto corresponding keypoints in the face image to determine the target keypoint.

Optionally, the controlling, in response to determining that the face image contains the shush gesture, a target controllable component in the vehicle to perform a preset action includes:
cropping, in response to determining that the face image contains the shush gesture, a second target image from the face image based on a rhombus constructed with a point located at a specified distance from the target keypoint in a direction opposite to the extension direction as a center, a second preset multiple of a face as a side length, and the extension direction as the inclination direction;
determining a shush virtual slot of a region of an index finger in the second target image during shush according to the second target image;
inputting the second target image into a hand keypoint detection model to obtain hand keypoints;
determining whether the shush gesture is a correct shush gesture based on an index finger keypoint representing the index finger among the hand keypoints and a positional relationship between the index finger keypoint and the shush virtual slot; and
controlling, in response to determining that the shush gesture is correct, the target controllable component in the vehicle to perform the preset action.

Optionally, the target keypoint is a lip keypoint representing a center of an upper lip; a 3D coordinate system is constructed with a nose tip keypoint representing a nose tip in the reconstructed 3D face model as an origin, a direction of a line connecting both eyes as an X-axis, a face orientation as a Z-axis, and a direction perpendicular to a plane defined by the X-axis and the Z-axis as a Y-axis; and the extension direction is a direction of the Y-axis of the 3D coordinate system.

Optionally, a length of the shush virtual slot is equal to a distance from the nose tip keypoint representing a nose tip in the face keypoints to the lip keypoint, an upper endpoint of the shush virtual slot is located at a point offset from the nose tip keypoint by 0.1 times the length in a positive direction of the Z-axis, and a lower endpoint of the shush virtual slot is located at a point offset from the lip keypoint by 0.1 times the length in the positive direction of the Z-axis.

Optionally, the specified distance is 0.25 times the face height, and the second preset multiple is 1.

Optionally, the first preset multiple is a square root of the area of the bounding rectangle, and the preset ratio is two-thirds.

Optionally, the controlling a target controllable component in the vehicle to perform a preset action includes:
if the target controllable component is an in-vehicle phone, rejecting a current incoming call of the in-vehicle phone;
if the target controllable component is an in-vehicle infotainment system, pausing playback of current content by the in-vehicle infotainment system; and
if the target controllable component is a vehicle window, closing the vehicle window.

In a second aspect, an embodiment of the present invention provides a shush gesture detection apparatus. The apparatus includes:
an acquisition unit, configured to acquire face keypoints from a face image including a face inside a vehicle, wherein the face image is captured by an in-vehicle camera;
an cropping unit, configured to crop a first target image from the face image based on a rectangular region constructed with a target keypoint among the face keypoints as a center, a first preset multiple of the area of a bounding rectangle of a figure formed by the face keypoints as the width, a preset ratio of the width as a height, and an extension direction of the face in the face image as an inclination direction of the height, wherein the first preset multiple is a positive number, the preset ratio is less than 1, and the target keypoint belongs to keypoint in a lip region;
a determination unit, configured to input the first target image into a shush detection model to determine whether the face image contains a shush gesture; and
a control unit, configured to control, in response to determining that the face image contains the shush gesture, a target controllable component in the vehicle to perform a preset action.

Optionally, the apparatus further includes:
a processing unit, configured to, after acquiring the face keypoints, input the face image into a face detection model to obtain primary face keypoints in the face image; and to map the primary face keypoints onto corresponding keypoints on a standard 3D face model to obtain a reconstructed 3D face model; and to map the reconstructed 3D face model back onto corresponding keypoints in the face image to determine the target keypoint.

Optionally, the control unit, when configured to control, in response to determining that the face image contains the shush gesture, a target controllable component in the vehicle to perform a preset action, is specifically configured to:
crop, in response to determining that the face image contains the shush gesture, a second target image from the face image based on a rhombus constructed with a point located at a specified distance from the target keypoint in a direction opposite to the extension direction as a center, a second preset multiple of a face as a side length, and the extension direction as the inclination direction;
determine a shush virtual slot of a region of an index finger in the second target image during shush according to the second target image;
input the second target image into a hand keypoint detection model to obtain hand keypoints;
determine whether the shush gesture is a correct shush gesture based on an index finger keypoint representing the index finger among the hand keypoints and a positional relationship between the index finger keypoint and the shush virtual slot; and
control, in response to determining that the shush gesture is correct, the target controllable component in the vehicle to perform the preset action.

Optionally, the target keypoint is a lip keypoint representing a center of an upper lip; a 3D coordinate system is constructed with a nose tip keypoint representing a nose tip in the reconstructed 3D face model as an origin, a direction of a line connecting both eyes as an X-axis, a face orientation as a Z-axis, and a direction perpendicular to a plane defined by the X-axis and the Z-axis as a Y-axis; and the extension direction is a direction of the Y-axis of the 3D coordinate system.

Optionally, a length of the shush virtual slot is equal to a distance from the nose tip keypoint representing a nose tip in the face keypoints to the lip keypoint, an upper endpoint of the shush virtual slot is located at a point offset from the nose tip keypoint by 0.1 times the length in a positive direction of the Z-axis, and a lower endpoint of the shush virtual slot is located at a point offset from the lip keypoint by 0.1 times the length in the positive direction of the Z-axis.

Optionally, the specified distance is 0.25 times the face height, and the second preset multiple is 1.

Optionally, the first preset multiple is a square root of the area of the bounding rectangle, and the preset ratio is two-thirds.

Optionally, the control unit, when configured to control a target controllable component in the vehicle to perform a preset action, is specifically configured to:
if the target controllable component is an in-vehicle phone, reject a current incoming call of the in-vehicle phone;
if the target controllable component is an in-vehicle infotainment system, pause playback of current content by the in-vehicle infotainment system; and
if the target controllable component is a vehicle window, close the vehicle window.

In a third aspect, an embodiment of the present invention provides an electronic device, including a processor and a memory, wherein the memory stores machine-executable instructions executable by the processor, the processor is configured to execute the machine-executable instructions to perform the shush gesture detection method according to any one of the first aspect.

In a fourth aspect, an embodiment of the present invention provides a machine-readable storage medium storing machine-executable instructions that, when invoked and executed by a processor, cause the processor to perform the shush gesture detection method according to any one of the first aspect.

The technical solutions provided by the embodiments of the present invention may include the following beneficial effects.

In the present invention, after acquiring face keypoints, to reduce interference during recognition and improve recognition efficiency, a constructed rectangular region is used to crop a first target image containing the mouth region from the face image. The first target image is then input into a shush detection model to determine whether the face image contains a shush gesture. If a shush gesture is contained, a target controllable component in the vehicle is controlled to perform a preset action. The above method is completed based on gestures. Compared with the prior art, it enables faster control, thereby improving interactive efficiency. Furthermore, since the gesture method is less susceptible to environmental factors compared to voice control methods, it helps enhance anti-interference capability for interactions in a vehicle cabin environment.

To make the above objects, features, and advantages of the present invention more apparent and easier to understand, the following specifically describes preferred embodiments with reference to the accompanying drawings.

### BRIEF DESCRIPTION OF DRAWINGS

To illustrate the technical solutions in the embodiments of the present invention more clearly, the following briefly introduces the accompanying drawings required for describing the embodiments. It should be understood that the following drawings show only some embodiments of the present invention and therefore should not be considered as limiting the scope. For those of ordinary skill in the art, other related drawings may be obtained based on these drawings without creative effort.
FIG. 1 is a flowchart of a shush gesture detection method provided by an embodiment of the present invention;
FIG. 2 is a flowchart of another shush gesture detection method provided by an embodiment of the present invention;
FIG. 3 is a flowchart of another shush gesture detection method provided by an embodiment of the present invention;
FIG. 4 is a schematic structural diagram of a shush gesture detection apparatus provided by an embodiment of the present invention; and
FIG. 5 is a schematic structural diagram of an electronic device provided by an embodiment of the present invention.

### DETAILED DESCRIPTION OF EMBODIMENTS

To make the objectives, technical solutions, and advantages of the embodiments of the present invention clearer, the technical solutions in the embodiments of the present invention will be described clearly and completely in conjunction with the accompanying drawings in the embodiments of the present invention. Apparently, the described embodiments are only some rather than all of the embodiments of the present invention. The components of the embodiments of the present invention described and shown in the accompanying drawings herein can be arranged and designed in various configurations. Therefore, the following detailed description of the embodiments of the present invention provided in the drawings is not intended to limit the scope of the present invention but merely represents selected embodiments of the present invention. Based on the embodiments of the present invention, all other embodiments obtained by those skilled in the art without creative effort shall fall within the scope of protection of the present invention.

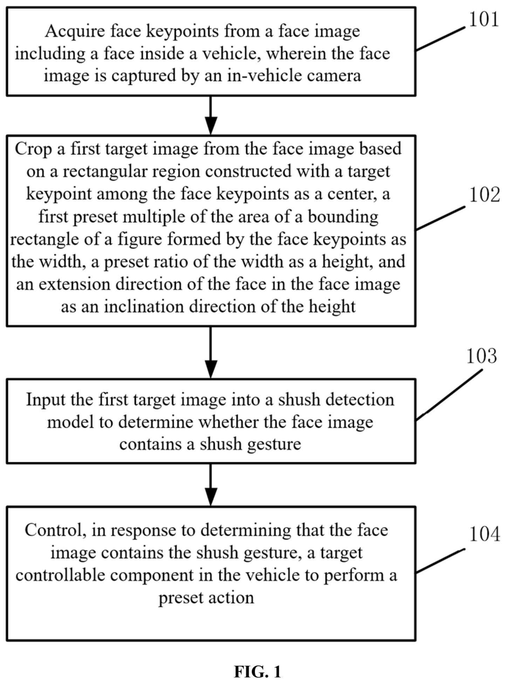

FIG. 1 is a flowchart of a shush gesture detection method provided by an embodiment of the present invention. As shown in FIG. 1, the method includes the following steps:
step 101: acquiring face keypoints from a face image including a face inside a vehicle, wherein the face image is captured by an in-vehicle camera;
step 102: cropping a first target image from the face image based on a rectangular region constructed with a target keypoint among the face keypoints as a center, a first preset multiple of the area of a bounding rectangle of a figure formed by the face keypoints as the width, a preset ratio of the width as a height, and an extension direction of the face in the face image as an inclination direction of the height, wherein the first preset multiple is a positive number, the preset ratio is less than 1, and the target keypoint belongs to keypoint in a lip region;
step 103: inputting the first target image into a shush detection model to determine whether the face image contains a shush gesture; and
step 104: controlling, in response to determining that the face image contains the shush gesture, a target controllable component in the vehicle to perform a preset action.

Specifically, an in-vehicle camera is arranged in the vehicle cabin. The in-vehicle camera captures a face video of the driver's face in real time, crops frames from the face video to obtain face images, or uses each frame in the face video as a face image. After obtaining the face image, face keypoints in the face image are acquired, such as mouth keypoints, eyebrow keypoints, eye keypoints, face contour keypoints, etc.

After acquiring the face keypoints, to improve processing speed and reduce unnecessary interference, a first target image including the lip region may be cropped from the face image based on the keypoints of the lip region. The cropping is centered on the keypoints of the lip region to ensure the lip region is included. The width is set as a first preset multiple of the area of the bounding rectangle of the figure formed by the face keypoints, and the height is set as a preset ratio of the width, such that a rectangular region (an inclined rectangle) is constructed with the extension direction of the face in the face image as the inclination direction of the height. The first target image is cropped from the face image, ensuring that the cropped first target image includes not only the lip region but also the region in front of the lip region. Since the shush gesture needs to be determined based on the lips, fingers, and the relationship between them, after cropping the first target image, it can be determined whether the current face image contains a shush gesture. When it is determined that a shush gesture is contained, the corresponding target controllable component can be controlled to perform preset actions, such as closing the vehicle window, closing the sunroof, muting the sound, etc.

The solution of the present invention is gesture-based. Compared with the prior art, it enables faster control, thereby improving interactive efficiency. Furthermore, since the gesture method is less susceptible to environmental factors compared to voice control methods, it helps enhance anti-interference capability for interactions in a vehicle cabin environment.

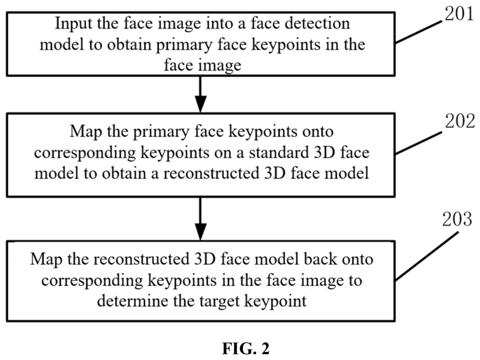

In a feasible embodiment, FIG. 2 is a flowchart of another shush gesture detection method provided by an embodiment of the present invention. As shown in FIG. 2, after obtaining the face keypoints, the method further includes the following steps:
step 201: inputting the face image into a face detection model to obtain primary face keypoints in the face image;
step 202: mapping the primary face keypoints onto corresponding keypoints on a standard 3D face model to obtain a reconstructed 3D face model; and
step 203: mapping the reconstructed 3D face model back onto corresponding keypoints in the face image to determine the target keypoint.

Specifically, because 3D keypoints can provide more information about the position and orientation of the head in space, the system can function effectively even when the head is at different rotation angles relative to the camera. For example, when requiring the index finger to be 1 cm away from the lips during a shush gesture with a side face, using 3D face keypoints makes it easier to determine the target feature point. Since the in-vehicle camera (a monocular camera) cannot directly capture depth information in 3D space, the solvePnP algorithm is used to estimate the 3D coordinates corresponding to the face keypoints in the face image. This process begins by using a pre-trained deep learning model to detect 2D face keypoints in the input image. These 2D keypoints typically include prominent face keypoints such as the eye corners, nose tip, and mouth corners, and their positions in the image can be accurately detected by the deep learning model. In a 2D image, the origin of the coordinate system may be the upper left corner of the image, with the x-axis extending to the right and the y-axis extending downward. The coordinate unit is pixel. The solvePnP algorithm is used for head pose estimation. To map these 2D keypoints into 3D space, a standard 3D face reference model, i.e., the standard 3D face model, is required. The origin of the 3D coordinate system corresponding to the standard 3D face model is the nose tip. The line connecting the eyes defines the x-axis pointing to the left; the direction perpendicular to the face plane defines the z-axis pointing forward; and the direction perpendicular to both the x-axis and z-axis defines the y-axis pointing upward (this direction corresponds to the extension direction of the face in the face image). This reference model contains 3D coordinate points corresponding to the 2D keypoints. Then, the solvePnP algorithm is used to estimate the pose of the face relative to the camera. It can calculate the optimal rotation and translation vectors based on the keypoints in the 2D image and the corresponding points in the 3D model, thereby transforming the 2D keypoints into the 3D coordinate system. After calculating the 3D coordinates, the accuracy of the reconstruction can be verified by projecting these coordinates back onto the 2D plane. The accuracy of the 3D coordinates is further improved through iterative optimization algorithms, such as the Levenberg-Marquardt method. If the projected 2D points closely align with the keypoints detected in the original image, the 3D reconstruction is considered successful. Thus, an accurate 3D face model can be reconstructed from an ordinary 2D image.

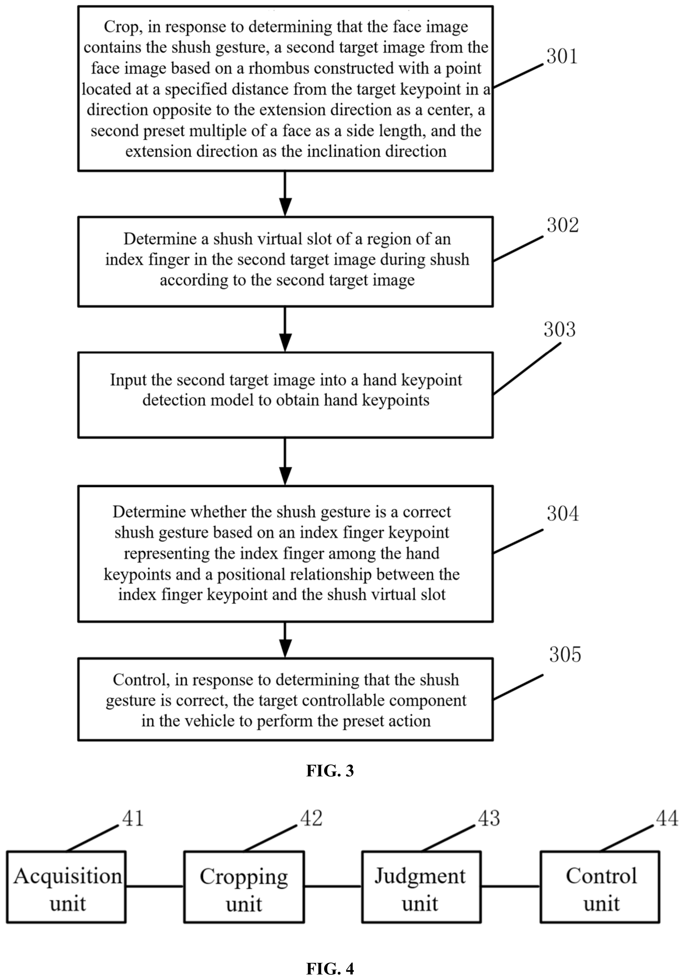

In a feasible embodiment, FIG. 3 is a flowchart of another shush gesture detection method provided by an embodiment of the present invention. As shown in FIG. 3, when executing step 104, it may be implemented through the following steps:
step 301: cropping, in response to determining that the face image contains the shush gesture, a second target image from the face image based on a rhombus constructed with a point located at a specified distance from the target keypoint in a direction opposite to the extension direction as a center, a second preset multiple of a face as a side length, and the extension direction as the inclination direction;
step 302: determining a shush virtual slot of a region of an index finger in the second target image during shush according to the second target image;
step 303: inputting the second target image into a hand keypoint detection model to obtain hand keypoints;
step 304: determining whether the shush gesture is a correct shush gesture based on an index finger keypoint representing the index finger among the hand keypoints and a positional relationship between the index finger keypoint and the shush virtual slot; and
step 305: controlling, in response to determining that the shush gesture is correct, the target controllable component in the vehicle to perform the preset action.

Specifically, to prevent errors in the shush gesture judgment in step 103, such as misidentifying a straw, sausage, cigarette, etc., as the index finger and thus misjudging them as shush gestures, and to verify whether the gesture conforms to the shush gesture requirements-i.e., whether the index finger keypoints and their positional relationship with the shush virtual slot meet the shush gesture requirements-the following points are specifically included.
1. Whether the index finger is straight. The index finger includes four key points: the fingertip, the first knuckle, the second knuckle, and the base of the third knuckle. Based on the four key points of the index finger, three bone segment vectors are calculated: the vector from the fingertip to the first knuckle, the vector from the first knuckle to the second knuckle, and the vector from the second knuckle to the base of the third knuckle. The included angles between adjacent bone segment vectors are calculated and a threshold (e.g., 10 degrees) is set. If all included angles are less than this threshold, the index finger is judged to be straight.
2. Whether the index finger is parallel to the vertical midline of the face and within a certain distance in front of the face. The shush virtual slot is projected onto the imaging plane to form a convex hull with the four keypoints of the index finger. When the area of the convex hull is less than 1/40 of the area of the face, the index finger is judged to be parallel or nearly parallel to the vertical midline of the face.
3. Whether the direction of the index finger is upward. Vector A is set from the base of the third knuckle of the index finger to the fingertip of the index finger, and vector B is set to be the projection vector from the lower end to the upper end of the shush virtual slot on the image plane. When the included angle between A and B is less than 90 degrees, the direction of the index finger is judged to be upward.
4. Whether the index finger is located at the horizontal center of the face. The geometric center of the four key points of the index finger lies between the regions formed by the two trisection points of the lips along the vertical direction of the face.

A relative position between the shush virtual slot and the index finger is determined by projecting the shush virtual slot onto the image plane and analyzing the included angle and endpoint distance between the projection of the shush virtual slot and the two line segments of the index finger.

To quickly complete the above detection, it is necessary to capture the lip region in the face image, as well as the region where the index finger may possibly be located. Specifically, the 3D keypoint of the center of the upper lip is taken, moved by 0.25 times the head height in the negative direction of the 3D y-axis, and projected onto the image plane to determine the center point of the rhombus region. The side length of the rhombus region is equal to the height of a human head, and the height direction (vertical direction) of the rhombus region is parallel to the vertical projection of the 3D face keypoints on the image plane. Hand keypoints refer to specific key positions in hand images, including the palm and the joints and fingertips of each finger. The output of the deep learning model includes two parts: binary classification, indicating whether a hand is contained in the image; and hand key point coordinates. If a hand is detected, the coordinate information of each key point of the hand is output, specifically including the palm and the joints and fingertips of all fingers.

Based on the 3D face model, the ideal position where the index finger should be placed when triggering the shush gesture is calculated. This position is referred to as the "shush virtual slot". The input is the 3D face keypoint coordinates, and the output is the coordinates of the shush virtual slot. The shush virtual slot is a 3D line segment represented by two 3D points, and its coordinates are calculated based on the 3D face keypoints. The length of the shush virtual slot is the distance from the nose tip to the midpoint of the upper lip. The upper endpoint of the shush virtual slot is located at the nose tip moved by 1/10 of the shush virtual slot length in the positive direction of the z-axis, and the lower endpoint is located at the midpoint of the upper lip moved by 1/10 of the shush virtual slot length in the positive direction of the z-axis.

After obtaining the shush virtual slot and the index finger keypoints, it is determined whether the shush gesture is correct based on the index finger keypoints and their positional relationship with the shush virtual slot.

In a feasible embodiment, the target keypoint is a lip keypoint representing a center of an upper lip; a 3D coordinate system is constructed with a nose tip keypoint representing a nose tip in the reconstructed 3D face model as an origin, a direction of a line connecting both eyes as an X-axis, a face orientation as a Z-axis, and a direction perpendicular to a plane defined by the X-axis and the Z-axis as a Y-axis; and the extension direction is a direction of the Y-axis of the 3D coordinate system.

In a feasible embodiment, the length of the shush virtual slot is the distance from the nose tip keypoint representing the nose tip keypoint among the face keypoints to the lip keypoint (specifically, the center of the lips). The upper endpoint of the shush virtual slot is located at the nose tip keypoint moved by 0.1 times the length of the shush virtual slot in the positive direction of the Z-axis. The lower endpoint of the shush virtual slot is located at the lip keypoint moved by 0.1 times the length of the shush virtual slot in the positive direction of the Z-axis.

In a feasible embodiment, the specified distance is 0.25 times the face height, and the second preset multiple is 1.

In a feasible embodiment, the first preset multiple is a square root of the area of the bounding rectangle, and the preset ratio is two-thirds.

In a feasible embodiment, the controlling a target controllable component in the vehicle to perform a preset action includes:
if the target controllable component is an in-vehicle phone, rejecting a current incoming call of the in-vehicle phone;
if the target controllable component is an in-vehicle infotainment system, pausing playback of current content by the in-vehicle infotainment system; and
if the target controllable component is a vehicle window, closing the vehicle window.

It should be noted that the preset actions to be executed may also involve turning off or pausing other controllable components, such as the in-vehicle air conditioning. The specific controllable components and preset actions may be set according to actual needs, and are not limited herein.

FIG. 4 is a schematic structural diagram of a shush gesture detection apparatus provided by an embodiment of the present invention. As shown in FIG. 4, the apparatus includes:
an acquisition unit 41, configured to acquire face keypoints from a face image including a face inside a vehicle, wherein the face image is captured by an in-vehicle camera;
a cropping unit 42, configured to crop a first target image from the face image based on a rectangular region constructed with a target keypoint among the face keypoints as a center, a first preset multiple of the area of a bounding rectangle of a figure formed by the face keypoints as the width, a preset ratio of the width as a height, and an extension direction of the face in the face image as an inclination direction of the height, wherein the first preset multiple is a positive number, the preset ratio is less than 1, and the target keypoint belongs to keypoint in a lip region;
a judgment unit 43, configured to input the first target image into a shush detection model to determine whether the face image contains a shush gesture; and
a control unit 44, configured to control, in response to determining that the face image contains the shush gesture, a target controllable component in the vehicle to perform a preset action.

In a feasible implementation, the apparatus further includes:
a processing unit, configured to, after acquiring the face keypoints, input the face image into a face detection model to obtain primary face keypoints in the face image; and to map the primary face keypoints onto corresponding keypoints on a standard 3D face model to obtain a reconstructed 3D face model; and to map the reconstructed 3D face model back onto corresponding keypoints in the face image to determine the target keypoint.

In a feasible embodiment, the control unit, when configured to control, in response to determining that the face image contains the shush gesture, a target controllable component in the vehicle to perform a preset action, is specifically configured to:
crop, in response to determining that the face image contains the shush gesture, a second target image from the face image based on a rhombus constructed with a point located at a specified distance from the target keypoint in a direction opposite to the extension direction as a center, a second preset multiple of a face as a side length, and the extension direction as the inclination direction;
determine a shush virtual slot of a region of an index finger in the second target image during shush according to the second target image;
input the second target image into a hand keypoint detection model to obtain hand keypoints;
determine whether the shush gesture is a correct shush gesture based on an index finger keypoint representing the index finger among the hand keypoints and a positional relationship between the index finger keypoint and the shush virtual slot; and
control, in response to determining that the shush gesture is correct, the target controllable component in the vehicle to perform the preset action.

In a feasible embodiment, the target keypoint is a lip keypoint representing a center of an upper lip; a 3D coordinate system is constructed with a nose tip keypoint representing a nose tip in the reconstructed 3D face model as an origin, a direction of a line connecting both eyes as an X-axis, a face orientation as a Z-axis, and a direction perpendicular to a plane defined by the X-axis and the Z-axis as a Y-axis; and the extension direction is a direction of the Y-axis of the 3D coordinate system.

In a feasible embodiment, a length of the shush virtual slot is equal to a distance from the nose tip keypoint representing a nose tip in the face keypoints to the lip keypoint, an upper endpoint of the shush virtual slot is located at a point offset from the nose tip keypoint by 0.1 times the length in a positive direction of the Z-axis, and a lower endpoint of the shush virtual slot is located at a point offset from the lip keypoint by 0.1 times the length in the positive direction of the Z-axis.

In a feasible embodiment, the specified distance is 0.25 times the face height, and the second preset multiple is 1.

In a feasible embodiment, the first preset multiple is a square root of the area of the bounding rectangle, and the preset ratio is two-thirds.

In a feasible embodiment, the control unit, when configured to control a target controllable component in the vehicle to perform a preset action, is specifically configured to:
if the target controllable component is an in-vehicle phone, reject a current incoming call of the in-vehicle phone;
if the target controllable component is an in-vehicle infotainment system, pause playback of current content by the in-vehicle infotainment system; and
if the target controllable component is a vehicle window, close the vehicle window.

For the principle explanation of the shush gesture detection apparatus, reference can be made to the related description of the shush gesture detection method, which will not be detailed here.

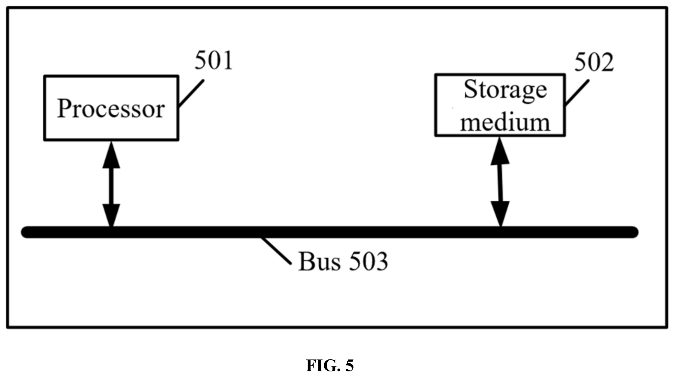

FIG. 5 is a schematic structural diagram of an electronic device provided by an embodiment of the present invention. The electronic device includes: a processor 501, a storage medium 502, and a bus 503. The storage medium 502 stores machine-readable instructions executable by the processor 501. When the electronic device executes a shush gesture detection method as described in the embodiments, the processor 501 communicates with the storage medium 502 via the bus 503, and the processor 501 executes the machine-readable instructions to perform the steps as described in the embodiments.

In an embodiment, the storage medium 502 may also execute other machine-readable instructions to perform other methods as described in the embodiments. For specific method steps and principles, please refer to the descriptions in the embodiments, which will not be repeated here.

An embodiment of the present invention further provides a computer-readable storage medium storing a computer program that, when executed by a processor, causes the processor to perform the steps shown in the above embodiments.

In the embodiments provided in the present invention, it should be understood that the disclosed devices and methods may be implemented in other manners. The apparatus embodiments described above are merely illustrative. For example, the division of the units is merely a division of logical functions, and there may be other division ways in actual implementation. For another example, a plurality of units or components may be combined or integrated into another system, or some features may be ignored or not implemented. Additionally, the mutual couplings, direct couplings or communication connections shown or discussed may be indirect couplings or communication connections through some communication interfaces, apparatuses or units, and may be in electrical, mechanical or other forms.

The units described as separate components may or may not be physically separated, and the components displayed as units may or may not be physical units, that is, they may be located in one place or distributed to multiple network units. Some or all of the units may be selected according to actual needs to achieve the objectives of the solutions of the embodiments.

In addition, the functional units in the embodiments provided by the present invention may be integrated into one processing unit, or each unit may exist physically alone, or two or more units may be integrated into one unit.

If the functions are implemented in the form of software functional units and sold or used as independent products, they may be stored in a computer-readable storage medium. Based on such understanding, the essence of the technical solutions, or the part contributing to the prior art, or part of the technical solutions of the present invention, may be embodied in the form of a software product. The computer software product is stored in a storage medium and includes several instructions for enabling a computer device (which may be a personal computer, a server, a network device, etc.) to perform all or part of the steps of the methods described in the various embodiments of the present invention. The aforementioned storage media include: U disk, mobile hard disk, read-only memory (ROM), random access memory (RAM), magnetic disk, optical disk, and other media that can store program code.

It should be noted that similar reference numerals and letters in the following drawings indicate similar items. Therefore, once an item is defined in one drawing, it does not need to be further defined and explained in subsequent drawings. Additionally, the terms "first," "second," "third," etc., are used only for distinguishing descriptions and should not be construed as indicating or implying relative importance.

Finally, it should be noted that the above embodiments are merely specific implementations of the present invention, used to illustrate the technical solution of the present invention but not to limit it. The scope of protection of the present invention is not limited thereto. Although the present invention has been described in detail with reference to the aforementioned embodiments, those skilled in the art should understand that any person familiar with the technical field may still modify or readily conceive variations to the technical solution described in the aforementioned embodiments within the technical scope disclosed in the present invention, or perform equivalent substitutions of some of the technical features. However, such modifications, variations, or substitutions do not cause the essence of the corresponding technical solution to depart from the spirit and scope of the technical solution of the embodiments of the present invention. All such modifications, variations, or substitutions shall fall within the scope of protection of the present invention. Therefore, the scope of protection of the present invention shall be defined by the claims.

### INDUSTRIAL PRACTICALITY

The present invention provides a shush gesture detection method and apparatus, an electronic device, and a storage medium, enabling quicker control execution, improved interaction efficiency, and reduced susceptibility to environmental factors, thus enhancing anti-interference capability for interactions in a vehicle cabin environment.

Furthermore, it can be understood that the shush gesture detection method and apparatus, the electronic device, and the storage medium of the present invention are reproducible and can be widely applied in the field of computer technology.

## Claims

1. A shush gesture detection method, **characterized by** comprising:
acquiring face keypoints from a face image comprising a face inside a vehicle, wherein the face image is captured by an in-vehicle camera;
cropping a first target image from the face image based on a rectangular region constructed with a target keypoint among the face keypoints as a center, a first preset multiple of an area of a bounding rectangle of a figure formed by the face keypoints as a width, a preset ratio of the width as a height, and an extension direction of the face in the face image as an inclination direction of the height, wherein the first preset multiple is a positive number, the preset ratio is less than 1, and the target keypoint belongs to a keypoint in a lip region;
inputting the first target image into a shush detection model to determine whether the face image contains a shush gesture; and
controlling, in response to determining that the face image contains the shush gesture, a target controllable component in the vehicle to perform a preset action.

2. The method according to claim 1, wherein after acquiring the face keypoints, the method further comprises:
inputting the face image into a face detection model to obtain primary face keypoints in the face image;
mapping the primary face keypoints onto corresponding keypoints on a standard 3D face model to obtain a reconstructed 3D face model; and
mapping the reconstructed 3D face model back onto corresponding keypoints in the face image to determine the target keypoint.

3. The method according to claim 1, wherein the controlling, in response to determining that the face image contains the shush gesture, a target controllable component in the vehicle to perform a preset action comprises:
cropping, in response to determining that the face image contains the shush gesture, a second target image from the face image based on a rhombus constructed with a point located at a specified distance from the target keypoint in a direction opposite to the extension direction as a center, a second preset multiple of a face as a side length, and the extension direction as the inclination direction;
determining a shush virtual slot of a region of an index finger in the second target image during shush according to the second target image;
inputting the second target image into a hand keypoint detection model to obtain hand keypoints;
determining whether the shush gesture is a correct shush gesture based on an index finger keypoint representing the index finger among the hand keypoints and a positional relationship between the index finger keypoint and the shush virtual slot; and
controlling, in response to determining that the shush gesture is correct, the target controllable component in the vehicle to perform the preset action.

4. The method according to claim 3, wherein the target keypoint is a lip keypoint representing a center of an upper lip; a 3D coordinate system is constructed with a nose tip keypoint representing a nose tip in the reconstructed 3D face model as an origin, a direction of a line connecting both eyes as an X-axis, a face orientation as a Z-axis, and a direction perpendicular to a plane defined by the X-axis and the Z-axis as a Y-axis; and the extension direction is a direction of the Y-axis of the 3D coordinate system.

5. The method according to claim 4, wherein a length of the shush virtual slot is equal to a distance from the nose tip keypoint representing a nose tip in the face keypoints to the lip keypoint, an upper endpoint of the shush virtual slot is located at a point offset from the nose tip keypoint by 0.1 times the length in a positive direction of the Z-axis, and a lower endpoint of the shush virtual slot is located at a point offset from the lip keypoint by 0.1 times the length in the positive direction of the Z-axis.

6. The method according to claim 3, wherein the specified distance is 0.25 times a face height, and the second preset multiple is 1.

7. The method according to claim 1, wherein the first preset multiple is a square root of the area of the bounding rectangle, and the preset ratio is two-thirds.

8. The method according to claim 1, wherein the controlling a target controllable component in the vehicle to perform a preset action comprises:
when the target controllable component is an in-vehicle phone, rejecting a current incoming call of the in-vehicle phone;
when the target controllable component is an in-vehicle infotainment system, pausing playback of current content by the in-vehicle infotainment system; and
when the target controllable component is a vehicle window, closing the vehicle window.

9. A shush gesture detection apparatus, **characterized by** comprising:
an acquisition unit, configured to acquire face keypoints from a face image comprising a face inside a vehicle, wherein the face image is captured by an in-vehicle camera;
an cropping unit, configured to crop a first target image from the face image based on a rectangular region constructed with a target keypoint among the face keypoints as a center, a first preset multiple of an area of a bounding rectangle of a figure formed by the face keypoints as a width, a preset ratio of the width as a height, and an extension direction of the face in the face image as an inclination direction of the height, wherein the first preset multiple is a positive number, the preset ratio is less than 1, and the target keypoint belongs to a keypoint in a lip region;
a determination unit, configured to input the first target image into a shush detection model to determine whether the face image contains a shush gesture; and
a control unit, configured to control, in response to determining that the face image contains the shush gesture, a target controllable component in the vehicle to perform a preset action.

10. An electronic device, **characterized by** comprising a processor and a memory, wherein the memory stores machine-executable instructions executable by the processor, the processor is configured to execute the machine-executable instructions to perform the shush gesture detection method according to any one of claims 1 to 8.

11. A machine-readable storage medium, **characterized by** storing machine-executable instructions that, when invoked and executed by a processor, cause the processor to perform the shush gesture detection method according to any one of claims 1 to 8.
